# EUROPEAN PATENT APPLICATION

(11) **EP 4 628 270 A1**
(43) Date of publication of application: **08.10.2025**
(21) Application number: 24382345.7
(22) Date of filing: 03.04.2024
(51) Int. Cl.: B28B 1/00, B29C 64/106, B33Y 30/00, B33Y 40/00, E04G 21/04, B25J 9/02, B66C 17/06

(54) **BUILDING DEVICE WITH ADDITIVE TECHNOLOGY**

(71) Applicant: A3d Additive Printer, S.L., 28012 Madrid (ES)
(72) Inventor: Buces Gogénola, Sergio Francisco, Madrid (ES); Roca de Togores, Álvaro, Madrid (ES)
(74) Representative: Clarke, Modet y Cía., S.L.

(57) **Abstract**

Building device with additive technology characterized in that it comprises two parallel guide structures (1) on which move two carriages (2) guided by skids (3), a support structure (5) configured to rest on the carriages (2) of the two parallel guide structures (1) directly or through two columns (4) which, in turn, rest on the carriages (2) of the two parallel guide structures (1), a support carriage (7) movable on said support structure (5), and an extruder (6) configured to support the two parallel guide structures (1) directly or through two columns (4) which, in turn, are supported on the carriages (2) of the two parallel guide structures (1), a support carriage (7) movable on said support structure (5), and an extruder (6) configured to perform a deposition of cementitious material, wherein the extruder (6) is located at a location to be chosen between the support carriage (7) and a telescopic structure (13) housed in the support carriage (7).

## Description

### Field of the Invention

The present invention relates to a building device with additive technology that improves the performance of this type of device and allows the construction of floors below ground level. The building device with additive technology subject of the invention is of application in construction.

### Background of the Invention

In the construction sector, formwork and other additional elements are traditionally used to form a wall that serves to contain the concrete that is poured in a fluid state and when it hardens, the formwork is removed.

A change in construction is achieved with the appearance of printers with additive technology that allow concrete constructions without the need for formwork, concreting, waiting for the concrete to harden and removing the formwork, since they are deposited layer by layer.

Traditional construction work has risks associated with it, so one benefit that additive printing has brought to construction is in the health and safety of employees on the job site. By knowing how to work effectively with printers, workers can perform their jobs more easily and reduce injuries in the field.

The printers used in construction are huge machines that present problems for their mobility and with a precision that, considering the construction sector, is not bad, but there is a lot of room for improvement in this regard.

In the prior art, CA2928832A1 discloses free-form additive manufacturing equipment, processes and products, including residential, commercial and other buildings, such that a mobile extruder places extruded material that solidifies in open spaces to create "scaffolds" or "skeletons" of buildings and other products. The elongated extruded elements are fused together or connected by other means to form a cellular structure, in this document the filler material or polymeric insulating foam, may be placed simultaneously or subsequently within the cellular structure to provide the desired strength, stiffness, insulation, barrier or other properties.

Also known is WO2022/217221A1 which discloses structural modules that can be produced by additive manufacturing, such modules can include interconnecting elements for coupling with each other, structural support members, external layers and/or integrated electrical connectivity, wherein the modules can be produced by a co-reactive additive manufacturing system (process in which multiple materials are fused or reacted with each other during the additive manufacturing process) that includes a movable printing arm and/or a movable table.

### Description of the Invention

The subject of the invention is a building device with additive technology comprising two parallel guide structures on which two carriages guided by skids move, a support structure configured to rest on the carriages of the two parallel guide structures directly or through two columns which, in turn, rest on the carriages of the two parallel guide structures, a support carriage movable on said support structure, and an extruder configured to perform a deposition of cementitious material, wherein the extruder is movable on said support structure, the extruder is configured to deposit cementitious material, wherein the extruder is located at a location to be chosen between the support carriage and a telescopic structure housed in the support carriage.

The building device with additive technology subject of the invention may comprise two columns fixed to the carriages, such that said columns serve as support for the supporting structure on the carriages.

In the building device with additive technology, subject of the invention, the columns comprise a first part and a second part such that the second part has displacement capacity with respect to the first part and configure a telescopic column.

In the building device with additive technology, subject of the invention, the first part of each column comprises a U-shaped structure, such that said U-shaped structure comprises pairs of facing rollers, the second part comprises two guides, such that the two guides supported on the pairs of rollers are configured to guide a vertical displacement of the second part of the column with respect to the first part of the column.

In the building device with additive technology, subject of the invention, the support structure comprises two rails facing each other and a rack associated with each rail, and the support carriage comprises two support wheels and two guide wheels, such that with the two support wheels on each rail and with the two guide wheels on the rack, a motor provides displacement to the support carriage in a controlled manner along the support structure.

In the building device with additive technology, subject of the invention, the extruder comprises a first axis with a plurality of blades moved by means of a first servo motor configured to keep the material to be deposited in motion, a second axis moved by a second servo motor configured to regulate a desired flow of the material to be deposited as a function of the printing speed.

In the building device with additive technology, subject of the invention, columns may comprise a coupling for the supporting structure.

In the building device with additive technology, subject of the invention, the carriages may comprise a coupling configured to fix the supporting structure or columns.

In the building device with additive technology, subject of the invention, the supporting structure is 12 meters long.

In the building device with additive technology, subject of the invention, the parallel guide structures measure 8 meters in length.

In the building device with additive technology, subject of the invention, the extruder further comprises inlets for additives, inlets for cleaning the tool, a heated jacket configured to heat the material to be deposited, and external cameras for visualizing and controlling the printing process on a monitor of the device.

### Brief description of the drawings

To complement the description to be given below and in order to help a better understanding of the characteristics of the invention, the present descriptive memory is accompanied by a set of drawings on the basis of which the innovations and advantages of the building device with additive technology covered by the invention will be more easily understood.

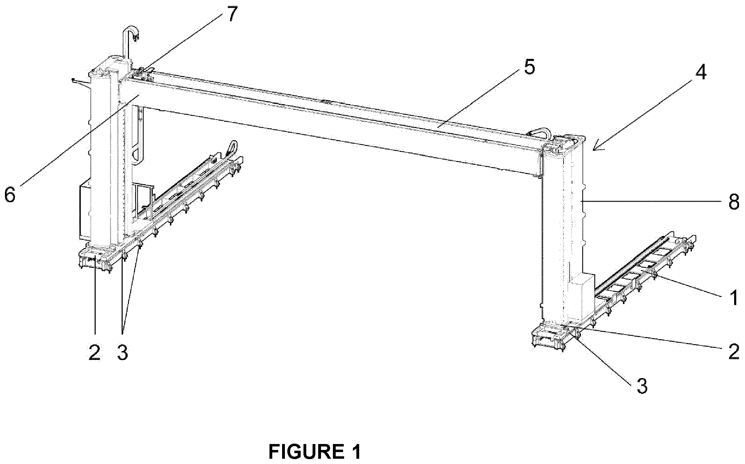

Figure 1 shows a perspective view of the building device with additive technology that is the subject of the invention.

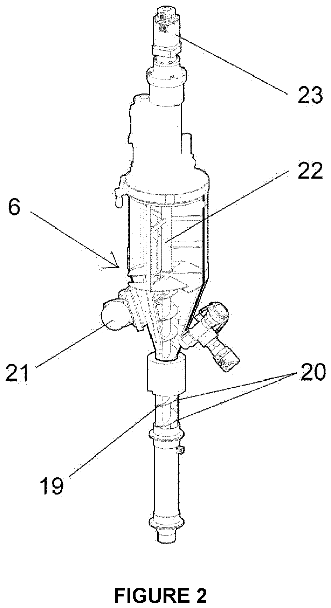

Figure 2 shows a perspective view of the extruder of the additive technology building device subject of the invention.

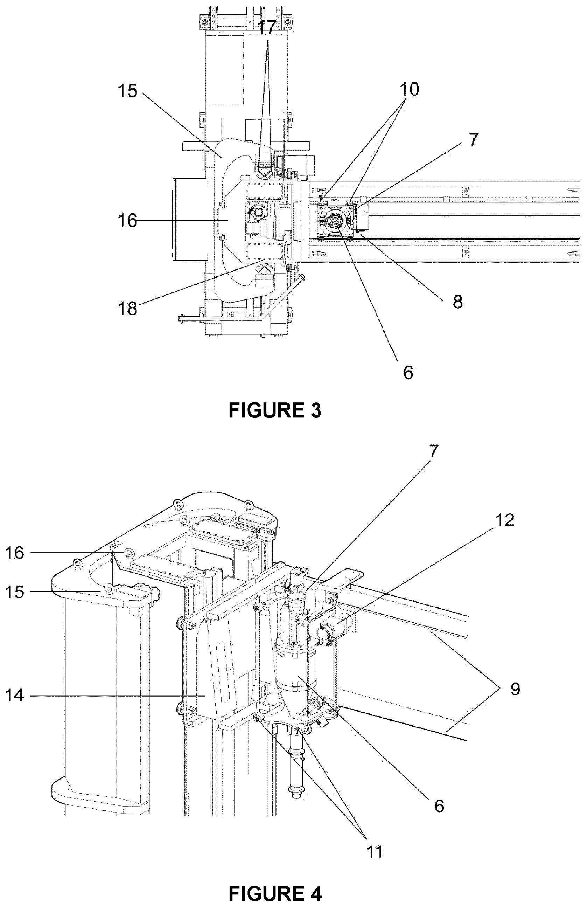

Figure 3 shows a plan view of a column and the supporting structure with the extruder of the additive technology building device subject of the invention.
Figure 4 shows a perspective view and having removed some element to see details of a column and the support structure with the extruder of the building device with additive technology subject of the invention.

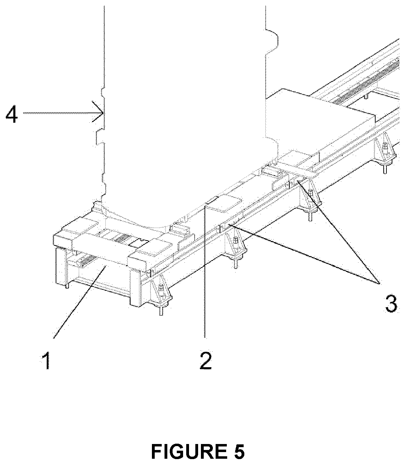

Figure 5 shows a perspective view of a column supported on a guide structure of the building device with additive technology subject of the invention.

The numerical references used in the figures are:
- 1.: guide structure,
- 2.: car,
- 3.: skid,
- 4.: column,
- 5.: support structure,
- 6.: extruder,
- 7.: support trolley,
- 8.: support structure rail,
- 9.: zipper,
- 10.: support wheel,
- 11.: guide wheel,
- 12.: motor associated with the support carriage,
- 13.: telescopic structure,
- 14.: coupling,
- 15.: first part of column,
- 16.: second part of column,
- 17.: pairs of rollers,
- 18.: solidarity guides to the second part,
- 19.: first axis,
- 20.: blades,
- 21.: first servo motor,
- 22.: second axis, and
- 23.: second servo motor.

### Preferred embodiment of the invention

The building device with additive technology subject of the invention comprises two parallel guide structures (1) separated from each other a distance that, in the preferred embodiment are 12 meters said parallel guide structures (1) are configured to rest on the ground and that on them move the rest of the components of the device subject of the invention to execute the building.

The building device with additive technology subject of the invention also comprises two carriages (2) guided by skids (3) which move on the parallel guide structures (1) in unison and which allow displacement along an X-axis of the device.

The device subject of the invention also comprises two columns (4) fixed to the carriages (2), such that said columns (4) serve as support for a support structure (5) joining the two columns (4) fixed to the carriages (2), such that said support structure (5) is distributed along a Y axis of the device. In the preferred embodiment of the invention, the support structure (5) has a configurable length starting from 6 meters.

In the device subject of the invention the support structure (5) presents modularity since it can present different configurations in terms of its dimensions, for example it can have 6 +8 meters, 12+6 meters or 12+10 meters.

In the building device with additive technology subject of the invention on the support structure (5) is located a support carriage (7) with displacement capacity along the support structure (5) such that, for the mentioned displacement of the support carriage (7), the support structure (5) comprises two rails (8) facing each other and a rack (9) associated with each rail (8), and the support carriage (7) comprises two support wheels (10) to rest on each rail (8) and two guide wheels (11) to rest on the rack (9) which together with a motor (12) enable the controlled displacement of the support carriage (7) on the support structure (5).

The device subject of the invention comprises an extruder (6), such that said extruder (6) is configured to perform the deposition of the cementitious material used as consumable in the device subject of the invention.

The support carriage (7) in the device subject of the invention can house the extruder (6) inside it, so that the extruder (6) is able to move along the support structure (5) but inside it. In another embodiment of the device subject of the invention, the support carriage (7) houses a telescopic structure (13) inside which the extruder (6) is located, so that the telescopic structure (13) is configured to, by extending the same, position the extruder (6) in a position lower than the position of the support structure (5) and, therefore, allows the execution of walls below the ground level.

The parallel guide structures (1) of the device subject of the invention make possible the displacement in horizontal direction (X axis) of the support structure (5) supported on the columns (4), such that the extruder (6) supported on the support carriage (7) and in turn on the support structure (5) also moves in horizontal direction (Y axis). In the preferred embodiment the maximum displacement in the X axis is 8 meters, although this displacement is not limiting since additional guide structures (not shown) can be positioned to allow a displacement greater than 8 meters.

The columns (4) house a coupling (14) for the supporting structure (5) and are configured to allow a vertical displacement of the supporting structure (5) for the realization of the printing that forms the printed envelope or housing structure by means of the extruder (6).

The configuration of the columns (4) of the Z axis is another of the most relevant and differentiating elements of the building device subject of the invention, since said columns (4) comprise a first part (15) and a second part (16) such that the second part (16) is configured to be able to move inside the first part (15) so that the second part (16) comprises the coupling (14) for the supporting structure (5) and has the capacity to raise the supporting structure (5) above the first part (15) making possible the execution of buildings up to 8 meters high.

The first part (15) of each column (4), in the preferred embodiment of the invention, comprises a U-shaped structure, such that said U-shaped structure comprises pairs of rollers (17) facing each other supported on two guides (18) solidary to the second part (16), such that the two guides (18) of the second part (16) of each column (4) supported on the pairs of rollers (17) are configured to guide a vertical displacement of the second part (16) of the column (4) with respect to the first part (15) of the column (4).

With the above configuration, the column (4) presents two extreme positions depending on the relative position of the first part (15) and the second part (16), the first folded position, in which the second part (16) is located inside the first part (15) and a second unfolded position in which the second part (16) is located outside the first part (15), so that this first part (15) and second part (16) configure a telescopic column (4).

In the preferred embodiment of the device subject of the invention, the second part (16) covers a height from 3 meters and the second part (16) exits the 3 meters up to 7 meters in height.

The device subject of the invention allows the printing of dwellings with a floor area of more than 96 m² (first floor), allowing the construction of two floors above ground and one below ground, thanks to the configuration of the telescopic columns (4) described above and the possibility of incorporating the telescopic structure (13) inside the support carriage (7).

One of the advantages provided by the device subject of the invention is the possibility of printing below grade taking advantage of the option presented by the device subject of the invention of interchanging parts, since, for example, in the event that it is desired to carry out exclusively a concreting below grade, in the device subject of the invention, the support structure (5) can be directly supported on the skids (3) that move along the parallel guide structures (1), therefore, the coupling (14) which is located on the columns (4) to fix the support structure (5), are also located on the said skids (3), so that the support structure (5) is directly coupled on the skids (3) not being necessary the installation of the columns (4) for the printing of plants below ground level, favoring the printing process in time improvements and cost savings.

The precision of the device subject of the invention is 1mm, which gives a precision unknown in similar devices of the state of the art, what is achieved with this level of precision is a considerable increase in the quality of the printed product and the improvement in the integration of other construction processes such as the integration of facilities (plumbing, electricity, insulation, ...) and structural elements (load-bearing, lintels, slabs,).

The extruder (6) of the device subject of the invention comprises mechanical, electronic components and its design allow a printing control because it combines the ideal state of the material, maintaining a churning at the top thanks to a first shaft (19) with a specific design of blades (20) that keeps the material in motion by the action of a first independent servo motor (21).

The extruder (6) also comprises a second shaft (22), driven by a second independent servo motor (23), which allows to regulate the desired flow of the material to be deposited for an optimal printing finish.

The extruder (6) has vibration capability at the top and has inlets for additives, which can accelerate the setting process at the tip of the extruder (6), other inlets for cleaning the tool, and the possibility of heating the material by incorporating a heated jacket, it also has external cameras to visualize and control the printing process on a monitor of the device.

As already explained, the building device with additive technology subject of the invention is a modular device with interchangeable parts, so that its different components can be assembled independently, ensuring that with small variations it can respond to printing needs that may arise due to limitations of the environment, design or technical restrictions of the place where it is to be installed.

The building device with additive technology is designed for the construction of single-family detached houses, but it can also meet the construction needs of terraced or semi-detached houses, simply by expanding the guides (1) to the required length in an economical and simple way, keeping the printing device installed without disassembling any part.

For the design of the building device with additive technology subject of the invention have been taken into account both the logistical requirements to facilitate its transport by standard means, as the requirements of buildability of floor heights, etc..

## Claims

1. Building device with additive technology **characterized in that** it comprises:
- two parallel guide structures (1) on which move two carriages (2) guided by skids (3),
- a support structure (5) configured to rest on the carriages (2) of the two parallel guide structures (1) directly or through two columns (4) which, in turn, rest on the carriages (2) of the two parallel guide structures (1),
- a support carriage (7) movable on said support structure (5), and
- an extruder (6) configured to perform a deposition of cementitious material, wherein the extruder (6) is located at a location to be chosen between the support carriage (7) and a telescopic structure (13) housed in the support carriage (7).

2. Building device with additive technology, according to claim 1, **characterized in that** it comprises two columns (4) fixed to the carriages (2), such that said columns (4) serve to support the supporting structure (5) on the carriages (2).

3. Building device with additive technology, according to claim 2, **characterized in that** the columns (4) comprise a first part (15) and a second part (16) such that the second part (16) is capable of displacement with respect to the first part (15) and configure a telescopic column.

4. Building device with additive technology, according to claim 3, **characterized in that**:
- the first part (15) of each column (4) comprises a U-shaped structure, such that said U-shaped structure comprises pairs of rollers (17) facing each other,
- the second part (16) comprises two guides (18),
so that the two guides (18) supported on the pairs of rollers (17) are configured to guide a vertical displacement of the second part (16) of the column (4) with respect to the first part (15) of the column (4).

5. Building device with additive technology, according to any one of claims 1 to 4, **characterized in that**:
- the support structure (5) comprises two facing rails (8) and a rack (9) associated to each rail (8), and
- the support trolley (7) comprises two support wheels (10) and two guide wheels (11),
such that with the two support wheels (10) on each rail (8) and with the two guide wheels (11) on the rack (9), a motor (12) provides displacement to the support carriage (7) in a controlled manner along the support structure (5).

6. Additive technology building device according to any one of claims 1 to 5, **characterized in that** the extruder (6) comprises:
- a first shaft (19) with a plurality of blades (20) moved by means of a first servo motor (21) configured to keep the material to be deposited in motion, and
- a second shaft (22) driven by a second servo motor (23) configured to regulate a desired flow of the material to be deposited as a function of the printing speed.

7. Building device with additive technology, according to any of claims 2 to 6, **characterized in that** the columns (4) house a coupling (14) for the supporting structure (5).

8. Building device with additive technology, according to any of claims 1 to 7, **characterized in that** the carriages (2) house a coupling (14) configured to fix the supporting structure (5) or the columns (4).

9. Building device with additive technology, according to any of claims 1 to 8, **characterized in that** the supporting structure (5) is 12 meters long.

10. Building device with additive technology, according to any one of claims 1 to 9, **characterized in that** the parallel guide structures are 8 meters long.

11. Building device with additive technology, according to claim 6 **characterized in that** the extruder (6) further comprises:
- additive inputs,
- inlets for cleaning the tool,
- a heated jacket configured to heat the material to be deposited, and
- external cameras to visualize and control the printing process on a monitor of the device.
